# DEMANDE DE BREVET EUROPEEN

(11) **EP 2 219 279 A1**
(43) Date de publication de la demande: **18.08.2010**
(21) Numéro de dépôt: 09290106.5
(22) Date de dépôt: 13.02.2009
(51) Int. Cl.: H02J 7/00, H02J 7/32, H02K 7/18

(54) **Appareil électronique portable**

(71) Demandeur: CELSIUS X VI II, 75011 Paris (FR)
(72) Inventeur: Pruvot, Thomas, 75019 Paris (FR)
(74) Mandataire: Micheli & Cie SA

(57) **Abrégé**

Un appareil électronique portable comprenant une source d'énergie rechargeable (8 ; 45) et un générateur électrique (23 ; 52) pour recharger la source d'énergie, est **caractérisé en ce qu**'il comprend des première et deuxième parties (2, 3 ; 41, 42) comprenant chacune des éléments participant au fonctionnement normal de l'appareil et pouvant être déplacées manuellement l'une par rapport à l'autre entre une position ouverte et une position fermée, et des moyens (27a, 26, 24 ; 49, 50, 51) pour transformer un mouvement relatif des première et deuxième parties (2, 3 ; 41, 42) en un mouvement d'entraînement du générateur électrique (23 ; 52).

## Description

La présente invention concerne un appareil électronique portable, en particulier un téléphone portable, comprenant une source d'énergie, telle qu'un accumulateur, une batterie, un condensateur, etc., rechargeable manuellement.

La source d'énergie d'un appareil électronique portable est normalement rechargeable électriquement, c'est-à-dire en branchant l'appareil au secteur par l'intermédiaire d'un transformateur.

Il a toutefois été proposé, dans les documents DE 32 11 114, EP 0 409 819, GB 2 347 800 et US 2004/0204180, des appareils électroniques portables dont la source d'énergie peut être rechargée manuellement. Ces appareils comportent un organe d'actionnement manuel, tel qu'une manivelle, une roue, un levier ou un poussoir, faisant saillie sur une face extérieure de l'appareil et permettant à l'utilisateur d'entraîner en rotation le rotor d'un générateur électrique relié électriquement à la source d'énergie.

Un inconvénient de ces appareils est qu'ils nécessitent un organe d'actionnement manuel spécifique, accessible depuis l'extérieur de l'appareil, et qui peut donc nuire à l'esthétique de l'appareil. Un autre inconvénient est qu'ils nécessitent une action spécifique de l'utilisateur pour recharger la source d'énergie.

La présente invention vise à remédier à ces inconvénients et propose à cette fin un appareil électronique portable comprenant une source d'énergie rechargeable et un générateur électrique pour recharger la source d'énergie, **caractérisé en ce qu**'il comprend des première et deuxième parties comprenant chacune des éléments participant au fonctionnement normal de l'appareil et pouvant être déplacées manuellement l'une par rapport à l'autre entre une position ouverte et une position fermée, et des moyens pour transformer un mouvement relatif des première et deuxième parties en un mouvement d'entraînement du générateur électrique.

La présente invention s'applique ainsi aux appareils électroniques portables comprenant deux parties mobiles, typiquement pivotantes ou coulissantes, l'une par rapport à l'autre. De nos jours, une grande proportion des appareils électroniques portables, en particulier des téléphones portables, sont conçus selon cette configuration. Généralement, l'une des parties mobiles comporte un clavier et un microphone et l'autre partie mobile comporte un écran et un écouteur.

La présente invention utilise donc l'énergie cinétique générée par des actions manuelles d'utilisation normale de l'appareil, à savoir son ouverture et sa fermeture, pour produire de l'électricité et recharger la source d'énergie. Aucun organe d'actionnement spécifique accessible à l'utilisateur n'est nécessaire, de sorte que l'appareil peut avoir une apparence normale.

Des modes de réalisation particuliers de l'invention sont définis dans les revendications dépendantes annexées.

D'autres caractéristiques et avantages de la présente invention apparaîtront à la lecture de la description détaillée suivante faite en référence aux dessins annexés dans lesquels :
- la figure 1 est une vue de profil d'un téléphone portable selon un premier mode de réalisation de l'invention, en position ouverte ;
- la figure 2 est une vue de profil du téléphone portable selon le premier mode de réalisation de l'invention, en position fermée ;
- la figure 3 est une vue en coupe du téléphone portable selon le premier mode de réalisation de l'invention, prise suivant la ligne III-III de la figure 1 ;
- la figure 4 est une vue en perspective montrant l'arrière du téléphone portable selon le premier mode de réalisation de l'invention et dans laquelle la coque d'une partie du téléphone a été retirée pour rendre visible la batterie du téléphone et un dispositif de recharge manuelle de cette batterie ;
- la figure 5 est une vue montrant le détail A de la figure 4 ;
- la figure 6 est une vue en coupe de l'articulation de deux parties du téléphone portable selon le premier mode de réalisation prise suivant la ligne VI-VI de la figure 3 ;
- la figure 7 est un schéma électrique du dispositif de recharge manuelle de la batterie ;
- la figure 8 est une vue de face d'un téléphone portable selon un deuxième mode de réalisation de l'invention, en position ouverte ;
- la figure 9 est une vue de face du téléphone portable selon le deuxième mode de réalisation de l'invention, en position fermée ; et
- la figure 10 est une vue en perspective montrant l'arrière du téléphone portable selon le deuxième mode de réalisation, dans laquelle une partie de la coque du téléphone a été retirée pour rendre visible la batterie du téléphone et un dispositif de recharge manuelle de cette batterie.

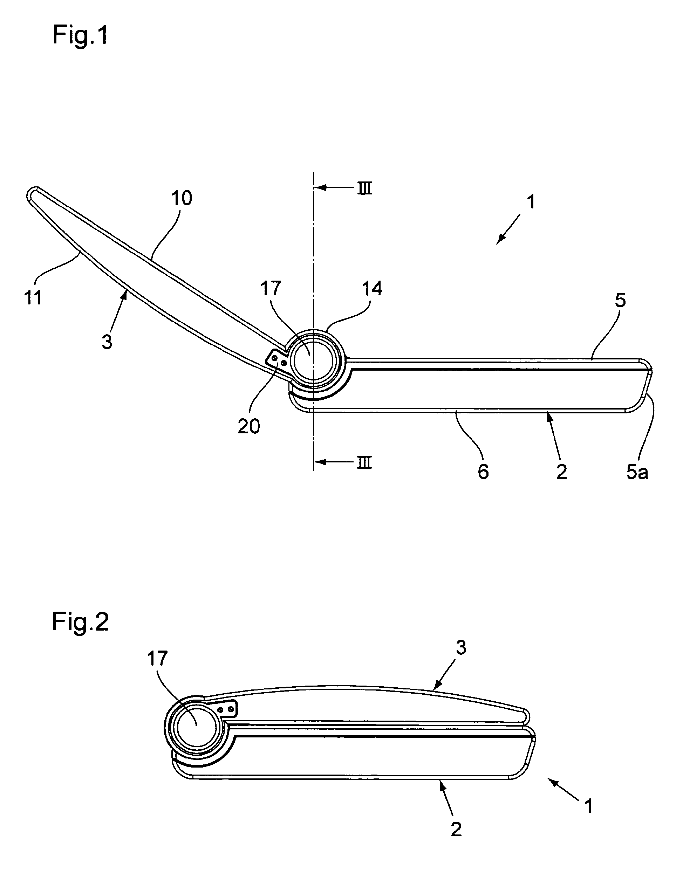

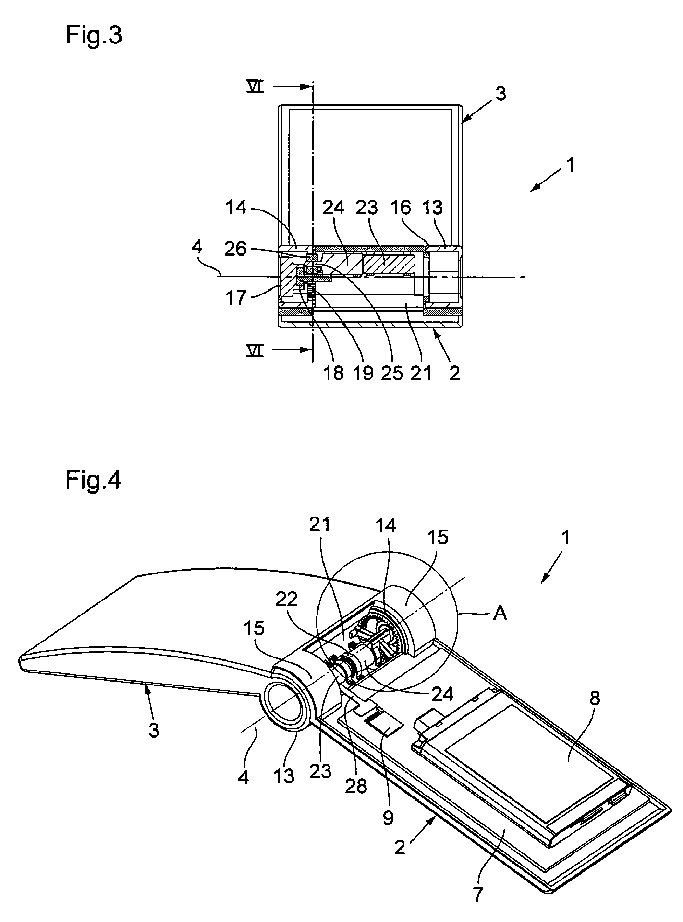

Un appareil électronique portable selon un premier mode de réalisation de l'invention est sous la forme d'un téléphone portable 1 tel que montré aux figures 1 à 6. Le téléphone 1 est en deux parties 2, 3 pivotantes l'une par rapport à l'autre autour d'un axe imaginaire 4. Chacune de ces deux parties 2, 3 comprend des éléments participant au fonctionnement normal du téléphone. Typiquement, la première partie 2 comprend un clavier sur sa face intérieure 5, un microphone (non représenté) sur sa face intérieure 5, sur son flanc d'extrémité 5a ou à l'intérieur de sa coque 6 et une carte électronique 7 à l'intérieur de sa coque 6. La carte électronique 7 comprend notamment le processeur (non représenté) du téléphone, une batterie rechargeable 8 alimentant le téléphone en énergie électrique et un circuit 9 de gestion de charge de la batterie 8. La deuxième partie 3 comprend typiquement un écran et un écouteur sur sa face intérieure 10 et des circuits électroniques correspondants à l'intérieur de sa coque 11. En position ouverte du téléphone (figures 1 et 4), les deux parties 2, 3 sont écartées angulairement l'une de l'autre, rendant accessible le clavier et l'écran. En position fermée du téléphone (figure 2), les deux parties 2, 3 sont rabattues l'une contre l'autre et l'écran et le clavier ne sont pas accessibles.

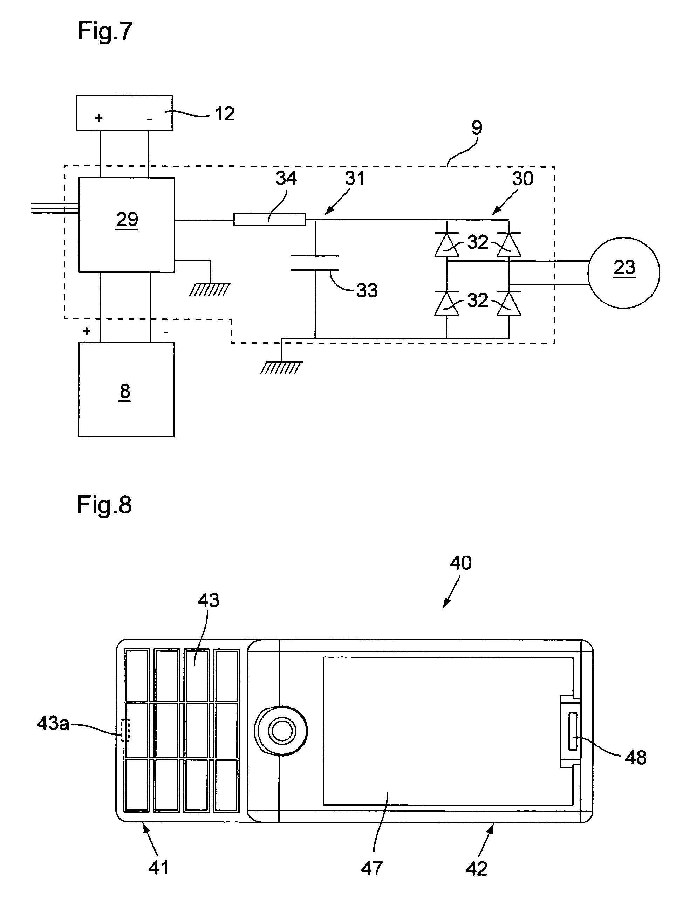

De manière classique, comme montré à la figure 7, la batterie 8 peut être rechargée en branchant le téléphone au secteur par l'intermédiaire d'un transformateur 12. Le circuit de gestion de charge 9 interconnecté entre le transformateur 12 et la batterie 8 détecte la présence du transformateur 12, fournit à la batterie 8 l'énergie électrique provenant du secteur et indique au processeur le niveau de charge de la batterie 8.

Les deux parties 2, 3 sont assemblées l'une à l'autre en formant une charnière d'axe 4. A cet effet, la deuxième partie 3 comprend deux éléments de charnière annulaires saillants 13, 14 séparés l'un de l'autre suivant l'axe 4 et qui sont reçus dans deux espaces respectifs définis par deux parois en arc de cercle 15 de la première partie 2. L'un 13 des éléments de charnière 13, 14 est maintenu et guidé en rotation autour de l'axe 4 par un épaulement circulaire 16 de la première partie 2. L'autre élément de charnière 14 est maintenu et guidé en rotation autour de l'axe 4 au moyen d'un capuchon 17 introduit latéralement dans l'élément de charnière 14 et comportant un trou de guidage 18 qui reçoit suivant l'axe 4 un axe matériel ou pivot 19 fixé rigidement à la première partie 2. Le capuchon 17 est fixé à la deuxième partie 3 et comprend à cet effet une patte 20 qui est vissée dans le flanc de la deuxième partie 3.

Entre les parois en arc de cercle 15 la première partie 2 comprend un logement 21 dans lequel sont fixés par des étriers 22 un générateur de courant électrique 23 et un multiplicateur de vitesse 24 couplés l'un à l'autre. Le générateur électrique 23 est par exemple une dynamo. Son rotor (non visible sur les dessins) est entraîné par l'arbre de sortie du multiplicateur de vitesse 24 à une vitesse supérieure à celle de l'arbre d'entrée du multiplicateur de vitesse 24, désigné par le repère 25. Le multiplicateur de vitesse 24 est d'un type classique en soi, utilisant par exemple un ou plusieurs trains épicycloïdaux. Une roue dentée 26 est fixée rigidement autour de l'arbre d'entrée 25. L'axe imaginaire commun de la roue 26, du multiplicateur de vitesse 24 et du générateur électrique 23 est parallèle mais disjoint de l'axe 4. La roue dentée 26 est à l'intérieur d'une couronne 27 d'axe 4 que comporte l'élément de charnière 14 et est en prise avec une denture intérieure 27a de cette couronne 27. La couronne 27 peut être une pièce rapportée fixée dans l'élément de charnière 14 ou être définie de manière monobloc par l'élément de charnière 14. Le générateur électrique 23 est relié électriquement au circuit de gestion de charge 9 par un conducteur 28 connectant le générateur 23 à la carte électronique 7 et par des conducteurs et contacts formés sur la carte électronique 7. Comme montré à la figure 7, le circuit de gestion de charge 9 comprend, en plus de l'unité de gestion de charge proprement dite 29, de type connu, remplissant les fonctions précitées de détection du transformateur 12 et de communication avec la batterie 8 et le processeur, un redresseur à double alternance 30 en entrée duquel est connecté le générateur électrique 23 et un amplificateur de tension 31 connecté entre le redresseur 30 et l'unité de gestion de charge 29. Le redresseur à double alternance 30 est typiquement constitué par un pont de diodes 32. Il permet de récupérer l'énergie du courant continu produit par le générateur électrique 23 indépendamment du sens de ce courant continu et donc du sens de pivotement relatif des première et deuxième parties 2, 3. L'amplificateur de tension 31 est typiquement constitué par un condensateur ou super-condensateur 33 recevant à ses bornes la tension de sortie du redresseur 30 et une résistance 34 connectée entre l'une des bornes du condensateur 33 et l'unité de gestion de charge 29.

Ainsi, à chaque pivotement relatif des parties 2, 3, qu'il soit dans un sens tendant à ouvrir le téléphone ou à le fermer, la denture 27a fixe par rapport à la deuxième partie 3 entraîne la roue 26 en rotation autour de son axe imaginaire fixe par rapport à la première partie 2, et la roue 26 entraîne en rotation le rotor du générateur électrique 23 par l'intermédiaire du multiplicateur de vitesse 24, ce qui produit du courant électrique dans le générateur 23 pour recharger la batterie 8. On notera que le multiplicateur de vitesse 24 ainsi que le rapport d'engrenage de la denture 27a et de la roue 26, très supérieur à 1, augmentent la quantité d'électricité produite pour un angle de pivotement donné des parties 2, 3 l'une par rapport à l'autre. De plus, du fait qu'il est intégré à la charnière 13 à 21, le dispositif de recharge manuelle constitué par les éléments 27a, 26, 24, 23 affecte peu l'encombrement du téléphone.

La recharge manuelle de la batterie 8 réalisée à chaque ouverture ou fermeture du téléphone lors d'utilisations normales de ce dernier permet d'espacer les besoins de recharge électrique à l'aide du transformateur 12, ceci sans action spécifique de la part de l'utilisateur. L'utilisateur peut aussi volontairement ouvrir et fermer le téléphone de façon répétée dans le but de recharger la batterie 8.

Dans une variante, on pourrait prévoir que le dispositif de recharge manuelle 27a, 26, 24, 23 soit utilisé pour recharger une batterie auxiliaire du téléphone, distincte de la batterie 8, et que cette batterie auxiliaire soit sollicitée par le téléphone (automatiquement ou sur commande de l'utilisateur par l'intermédiaire d'un bouton prévu à cet effet) lorsque la batterie 8 est vide.

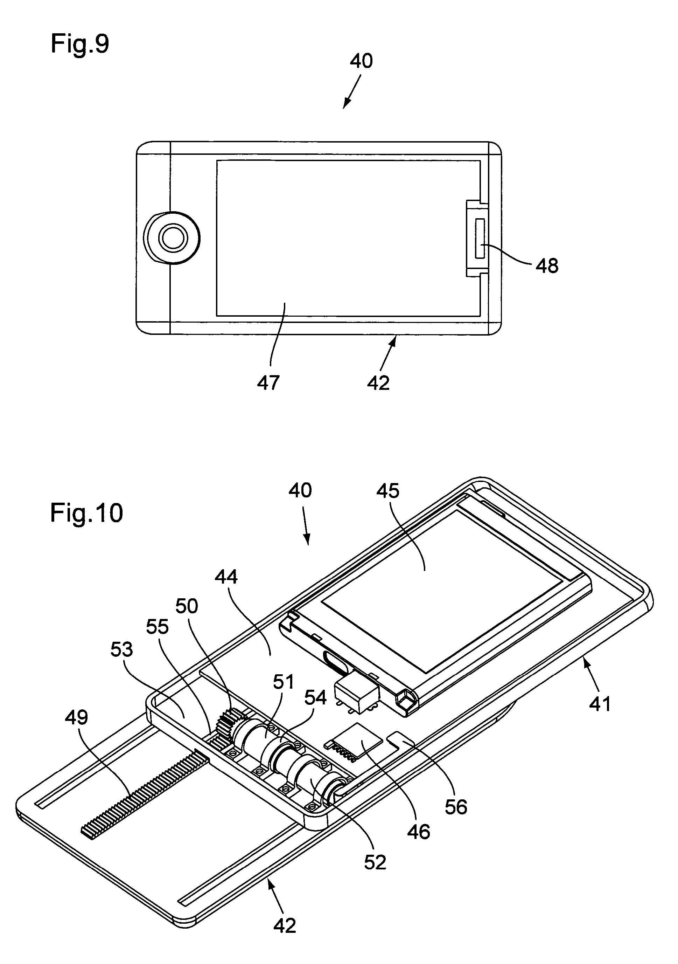

Un appareil électronique portable selon un deuxième mode de réalisation de l'invention est sous la forme d'un téléphone portable 40 tel que montré aux figures 8 à 10. Le téléphone 40 est en deux parties 41, 42 coulissantes l'une par rapport à l'autre dans la direction longitudinale du téléphone. Chacune de ces deux parties 41, 42 comprend des éléments participant au fonctionnement normal du téléphone. Typiquement, la première partie 41 comprend un clavier 43 sur sa face antérieure, un microphone 43a sur sa face antérieure, sur son flanc d'extrémité ou à l'intérieur de sa coque, et une carte électronique 44 à l'intérieur de sa coque. La carte électronique 44 comprend notamment le processeur (non représenté) du téléphone, une batterie rechargeable 45 alimentant le téléphone en énergie électrique et un circuit 46 de gestion de charge de la batterie 45. La deuxième partie 42 comprend typiquement un écran 47 et un écouteur 48 sur sa face antérieure et des circuits électroniques correspondants à l'intérieur de sa coque. Les figures 8 et 10 montrent le téléphone en position ouverte, où le clavier 43 est découvert. Dans la position fermée du téléphone, montrée à la figure 9, la deuxième partie 42 recouvre la première partie 41 et son clavier 43.

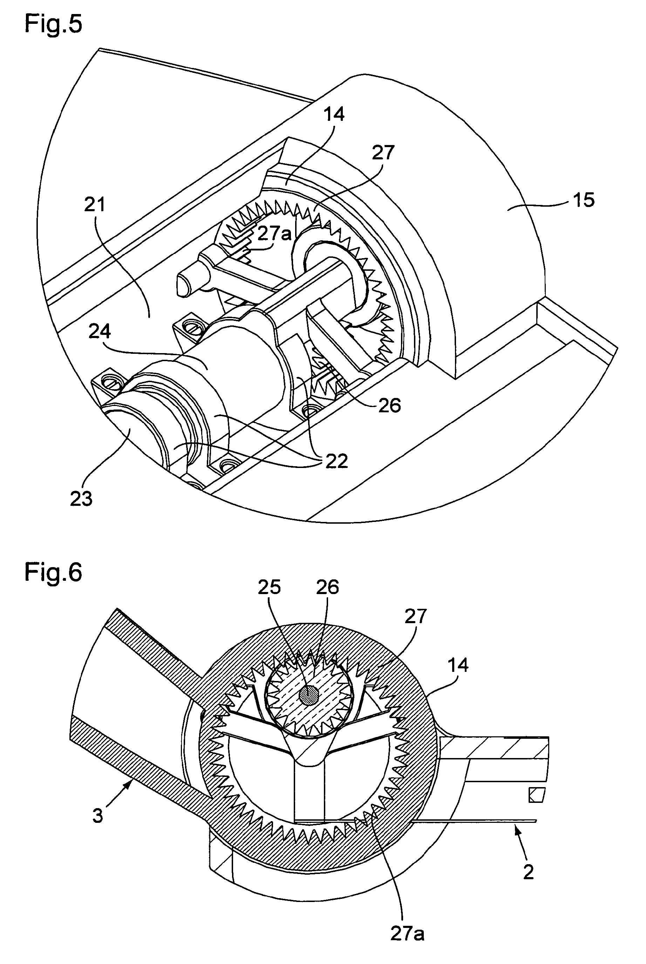

Comme dans le premier mode de réalisation, la batterie 45 peut être rechargée en branchant le téléphone au secteur par l'intermédiaire d'un transformateur, mais aussi manuellement par l'ouverture et la fermeture du téléphone. La recharge manuelle s'effectue au moyen d'un dispositif visible à la figure 10, qui comprend une crémaillère 49 fixée au dos de la deuxième partie 42, une roue dentée 50 en prise avec la crémaillère 49 et fixée autour de l'arbre d'entrée d'un multiplicateur de vitesse 51 et un générateur électrique 52 dont le rotor est couplé à l'arbre de sortie du multiplicateur de vitesse 51. Le multiplicateur de vitesse 51 et le générateur électrique 52 sont fixés dans un logement 53 de la première partie 41 par des étriers 54. La crémaillère 49 est rendue accessible à la roue dentée 50 par une fente longitudinale 55 pratiquée dans la coque de la première partie 41 et dans laquelle glisse la crémaillère 49 lors d'un coulissement relatif des parties 41, 42. Le générateur électrique 52 est relié électriquement au circuit de gestion de charge 46 par un conducteur 56 connectant le générateur 52 à la carte électronique 44 et par des conducteurs et contacts formés sur la carte électronique 44. Le circuit de gestion de charge 46 est identique au circuit 9 illustré à la figure 6.

La présente invention n'est pas limitée à un type d'appareil électronique portable particulier. Elle pourrait en effet d'appliquer à d'autres appareils électroniques portables qu'un téléphone portable, par exemple un assistant numérique personnel (PDA) ou un ordinateur portable. La présente invention pourrait aussi s'appliquer à des appareils électroniques portables comprenant une source d'énergie autre qu'une batterie d'accumulateurs, par exemple un simple élément accumulateur ou un condensateur de forte capacité.

## Revendications

1. Appareil électronique portable comprenant une source d'énergie rechargeable (8 ; 45) et un générateur électrique (23 ; 52) pour recharger la source d'énergie, **caractérisé en ce qu'**il comprend des première et deuxième parties (2, 3 ; 41, 42) comprenant chacune des éléments participant au fonctionnement normal de l'appareil et pouvant être déplacées manuellement l'une par rapport à l'autre entre une position ouverte et une position fermée, et des moyens (27a, 26, 24 ; 49, 50, 51) pour transformer un mouvement relatif des première et deuxième parties (2, 3 ; 41, 42) en un mouvement d'entraînement du générateur électrique (23 ; 52).

2. Appareil électronique portable selon la revendication 1, **caractérisé en ce que** la première partie (2 ; 41) comprend le générateur électrique (23 ; 52) et **en ce que** lesdits moyens de transformation comprennent un premier organe d'entraînement (26, 50) monté dans ou sur la première partie (2 ; 41) et qui entraîne le générateur électrique (23, 52) lorsqu'il est en mouvement et un deuxième organe d'entraînement (27a ; 49) solidaire de la deuxième partie (3 ; 42) et qui entraîne le premier organe d'entraînement (26 ; 50) lors d'un mouvement relatif des première et deuxième parties (2, 3 ; 41, 42).

3. Appareil électronique portable selon la revendication 2, **caractérisé en ce que** le premier organe d'entraînement comprend une roue dentée (26 ; 50) montée sur un arbre (25) couplé au générateur électrique (23 ; 52) et le deuxième organe d'entraînement comprend une denture (27a ; 49) avec laquelle la roue dentée (26 ; 50) est en prise.

4. Appareil électronique portable selon la revendication 2 ou 3, **caractérisé en ce que** la première partie (2 ; 41) comprend en outre la source d'énergie (8 ; 45).

5. Appareil électronique portable selon l'une quelconque des revendications 2 à 4, **caractérisé en ce qu'**il comprend un multiplicateur de vitesse (24 ; 51) entre le premier organe d'entraînement (26 ; 50) et le générateur électrique (23 ; 52).

6. Appareil électronique portable selon l'une quelconque des revendications 1 à 5, **caractérisé en ce que** les première et deuxième parties (2, 3) sont pivotantes l'une par rapport à l'autre autour d'un axe de pivotement relatif imaginaire (4).

7. Appareil électronique portable selon la revendication 6, **caractérisé en ce qu'**il comprend une charnière (13-21) définissant ledit axe de pivotement relatif imaginaire (4) et **en ce que** lesdits moyens de transformation (27a, 26, 24) et le générateur électrique (23) sont situés dans ladite charnière.

8. Appareil électronique portable selon la revendication 6 ou 7, **caractérisé en ce que** la première partie (2) comprend le générateur électrique (23) et **en ce que** lesdits moyens de transformation comprennent une roue dentée (26) montée dans ou sur la première partie (2) autour d'un arbre (25) couplé au générateur électrique (23) et une denture intérieure (27a) d'une couronne fixe (27) de la deuxième partie (3) ayant pour axe imaginaire ledit axe de pivotement relatif imaginaire (4) et avec laquelle la roue dentée (26) est en prise.

9. Appareil électronique portable selon l'une quelconque des revendications 1 à 5, **caractérisé en ce que** les première et deuxième parties (41, 42) sont coulissantes l'une par rapport à l'autre.

10. Appareil électronique portable selon la revendication 9, **caractérisé en ce que** la première partie (41) comprend le générateur électrique (52) et **en ce que** lesdits moyens de transformation comprennent une roue dentée (50) montée dans ou sur la première partie (41) autour d'un arbre couplé au générateur électrique (52) et une crémaillère (49) solidaire de la deuxième partie (42) et avec laquelle la roue dentée (50) est en prise.

11. Appareil électronique portable selon l'une quelconque des revendications 1 à 10, **caractérisé en ce qu'**il comprend en redresseur (30) connecté entre le générateur électrique (23 ; 52) et la source d'énergie (8 ; 45) pour permettre la recharge de la source d'énergie (8 ; 45) indépendamment du sens du mouvement relatif des première et deuxième parties (2, 3 ; 41, 42).

12. Appareil électronique portable selon l'une quelconque des revendications 1 à 11, **caractérisé en ce que** chacune des première et deuxième parties (2, 3 ; 41, 42) comprend au moins l'un des éléments suivants : clavier (5 ; 43), microphone (43a), écran (10 ; 47), écouteur (48).

13. Appareil électronique portable selon l'une quelconque des revendications 1 à 12, **caractérisé en ce qu'**il consiste en un téléphone portable.
